(19) Europäisches Patentamt
European Patent Office
Office européen des brevets

(11) **EP 4 512 654 A1**

(12) **EUROPEAN PATENT APPLICATION**

(43) Date of publication:
**26.02.2025 Bulletin 2025/09**

(21) Application number: **23193285.6**

(22) Date of filing: **24.08.2023**

(51) International Patent Classification (IPC):
**B60L 53/62** (2019.01)     **B60L 53/66** (2019.01)
**B60L 53/68** (2019.01)

(52) Cooperative Patent Classification (CPC):
**B60L 53/62; B60L 53/66; B60L 53/68**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **Jain, Naman**
**136118 Kurukshetra, Haryana (IN)**
• **Kumar, Abhay**
**560100 Bangalore, Karnataka (IN)**
• **Nagar, Deepak**
**110030 New Delhi (IN)**
• **Ramanath, Vinay**
**560070 Bengaluru, Karnataka (IN)**

(74) Representative: **Patentanwaltskanzlei WILHELM
& BECK
Prinzenstraße 13
80639 München (DE)**

(54) **ROBUST OPTIMIZATION OF CHARGING OPERATIONS OF ELECTRIC VEHICLE CHARGING STATIONS**

(57)     The present invention provides a method, a computing system, and a computer-program product for robust optimization of charging of a plurality of electric vehicles (EVs) (108) scheduled for charging at a charging station (102). The charging station (102) comprises a plurality of chargers (106). In one embodiment, the method comprises obtaining vehicle data and station data (130). Based on the vehicle data and the station data (130), it is determined if a set of EVs from amongst the plurality of EVs has failed to achieve a pre-defined target SoC, after a pre-defined charging duration. If the set of EVs has failed to achieve the pre-defined target SoC, a target power is computed. Further, the method includes adjusting at least one of the maximum power of each charger associated with charging of each EV from the set of EVs and the maximum power of the set of EVs as per the target power, to reach the target SoC of the set of EVs.

**FIG. 1**

EP 4 512 654 A1

## EP 4 512 654 A1

**Description**

The present invention generally relates to charging stations, and more particularly relates to methods and systems for robust optimization of charging operations of a charging station associated with electric vehicles.

Electric vehicles play a vital role in providing sustainable transportation to meet energy demands of future and reduce emissions and other pollutants. To increase a penetration of electric vehicles into regular vehicles a robust network of charging stations is desired to efficiently charge the electric vehicles. For example, to charge the electric vehicles, the charging stations generally order electricity a day in advance. In such a scenario, a station operator who is in charge of buying electricity for charging vehicles during all time slots of a day is required to provide an accurate estimate of the power demand . Therefore, it becomes essential for the station operator to obtain a good estimation of electricity demand for all time slots as a wrong estimation may on one hand result in ordering more electricity than required and lead to wastage of electricity and on the other hand may result in undercharging of some electric vehicles, if ordered less than required.

Moreover, power demand of a charging station depends on several operational factors. These operational factors mainly include arrival time of an electric vehicle, departure time of an electric vehicle, and initial state of charge (SoC). Arrival time and departure time decides a plug-in duration of the electric vehicle, the initial SoC determines the energy required to charge the electric vehicle. Each electric vehicle has a schedule and associated arrival SoC. Various techniques have been used to predict the power demand for charging the electric vehicles. However, due to uncertainties in the operational factors, accurate forecasting of the operational factors has become difficult. For example, the uncertainties may arise due to multiple factors, such as weather conditions, traffic situation, driver behavior, route characteristics, age of vehicle battery, and so on. Due to uncertainty around the operational factors, the power demand becomes uncertain and less power if ordered may lead to undercharged electric vehicles.

Moreover, when the charging station has already been deployed, meeting the power demand of the undercharged vehicles may be cumbersome. For example, if it is determined that a maximum power of chargers deployed at the charging station is insufficient for charging the electric vehicles as per respective target departure SoC, replacing existing chargers with new high power chargers may be time consuming and costly.

In light of the above, considering the uncertainties in operational factors there exists a need to correctly predict the power demand for all time slots in advance so that station operators may order the power as per their requirement.

There also exists a need for optimizing operations of the charging station such that the electric vehicles are not undercharged under the uncertainties in the operational factors.

Therefore, it is an object of the present invention to provide methods and computing systems for correctly predicting the power demand for all time slots in advance so that station operators may order the power as per their requirement.

It is also an object of the present invention to provide methods and computing systems for robust optimization of charging operations of the charging station associated with electric vehicles.

The object of the present invention is achieved by methods described herein. A charging station may be considered as an electrical equipment that supplies electrical power for charging electric vehicles. Examples of electric vehicles include, but are not limited to, an electric bus, an electric truck, an electric car, and an electric scooter. The charging station may include a plurality of chargers, wherein each charger may have a maximum power at which the electric vehicles may be charged.

In a preferred embodiment of the present invention, the method comprises obtaining vehicle data associated with each of the plurality of electric vehicles and station data associated with the charging station. The vehicle data being indicative of at least a state of charge (SoC) of an electric vehicle upon arrival at the charging station, an arrival time of the electric vehicle at the charging station, and a maximum power of the electric vehicle. The vehicle data may also include a charging schedule, mapping information of corresponding charger, and a capacity of a charge storage unit, of each of the plurality of electric vehicles. Further, the station data being indicative of at least a maximum power of each of the plurality of chargers.

Further, based on the vehicle data and the station data, it is determined if a set of electric vehicles from amongst the plurality of electric vehicles has failed to achieve a pre-defined target SoC. The determination is performed after a pre-defined charging duration for the plurality of electric vehicles. For example, after 2 hours of charging, if all the plurality of electric vehicles were expected to be completely charged, the method determines if the set of the electric vehicles have remained undercharged or not.

If the set of electric vehicles has failed to achieve the pre-defined target SoC, the method includes computing a target power to achieve the target SoC of the set of electric vehicles. The target power may be understood as a power required to fully charge the set of electric vehicles in the stipulated time.

To meet the target power, the maximum power of each charger associated with charging of each electric vehicle from the set of electric vehicles is adjusted. For example, it is determined that the maximum power of each charger associated with charging of the set of EVs is less than the maximum power of the set of EVs. If so, the maximum power of each charger associated with charging of the set of EVs is increased such that the increased power of the charger becomes equal to the maximum of the set of EVs.

Thereafter, a notification is generated for deploying the charging station based on the adjustments of at least one of the maximum power of each charger and the maximum power of the set of EVs, as per the target power.

Upon increasing the maximum power of each charger, the method includes determining whether a subset of EVs from the set of EVs has failed to reach the target SoC, after the pre-defined charging duration. For example, it is determined that after the stipulated time, such as 2 hours of charging, with the increased power of charger, certain EVs remain undercharged. In such a case, it is determined that the increased power of each charger associated with charging of the set of EVs is equal to the maximum power of the set of EVs. If the increased power of the charger is same as the maximum power of the set of EVs, the maximum power of the EV is increased based on the target power.

In a preferred embodiment, a power demand of the plurality of electric vehicles scheduled for charging at the charging station is predicted based on the vehicle data. For example, a graphical representation of a variation in power consumption of each of the plurality of electric vehicles with respect to a time of a day at which each of the plurality of electric vehicles is getting charged, at the charging station is generated.

In a preferred embodiment, the graphical representation is generated using a sampling technique. For example, a random sampling technique may be used to generate the graphical representation of the variation in the power consumption of each of the plurality of electric vehicles with respect to the time of charging. Specifically, Monte Carlo Simulation (MCS) may be employed to predict possible outcomes of uncertain events.

In a preferred embodiment, the station data may further include a number of chargers deployed at the charging station, mapping information of corresponding electric vehicle, number of ports per charger, maximum power of each charger, and maximum power of each port. For example, in the preferred embodiment the charging station may include 23 chargers. Further, each charger may have two ports. The chargers may be of different powers, such as 150kW or 200kW.

In a preferred embodiment, the method includes predicting a state of charge of each of the plurality of electric vehicles, after the pre-defined charging duration. In an example, the method may employ a deterministic technique to predict the state of charge of each of the plurality of electric vehicles, after the pre-defined charging duration. The deterministic technique does not take into consideration any uncertainty in the operational factors and thus predicts an expected state of charge of each of the plurality of electric vehicles, as per an ideal scenario.

In a preferred embodiment, the method includes generating a graphical representation depicting variation in a state of charge of each of the plurality of EVs upon completion of the pre-defined charging duration of each of the plurality of EVs. The graphical representation may indicate a charging status of electric vehicles and may depict an identifier of each electric vehicle and a corresponding state of charge of each electric vehicle, after the pre-defined charging duration.

In a preferred embodiment, the method includes computing a capacity of at least one charge storage unit associated with each EV, charging duration of each EV, and a difference between the actual SoC and the target SoC of each EV. For example, to determine the adjustment in the power of the charger or the electric vehicle, the target power of the charger or the electric vehicle is computed as indicated below:

$$Target\ power =\ max\ power$$
$$+ \frac{Battery\ capacity\ *\ Maximum\ SoC\ in\ deficit}{Duration\ in\ hours\ the\ vehicle\ is\ available\ in\ station\ *\ 100}$$

According to the present invention, as the uncertainties in the operating factors are considered before deployment of the charging statoin, the station operator may know the desirable charging infrastructure before commisioning the charging station and may save the cost of upgrading the equipments at a later point in time.

The present invention sets the maximum power of chargers to optimum levels such that even under the presence of any uncertainty, the electric vehicle is charged as per expected SoC. The present invention therefore provides a robust technique to avoid undercharging of any electric vehicle.

The object of the present invention is also achieved by a computing system for optimizing operations of a charging station associated with electric vehicles. The computing system comprises one or more processing unit(s) and a memory coupled to the processing unit(s). The memory comprises an adjustment module stored in the form of machine-readable instructions executable by the processing unit. The adjustment module is configured to perform the method as described above.

The object of the present invention is also achieved by a computer-program product having machine-readable instructions stored therein, that when executed by one or more processing unit(s), cause the one or more processing unit(s) to perform method steps as described above.

Advantageously, the adjustment of the power requirement of the chargers or of the electric vehicles may be automated due to the generated power demand curves and charging status plots and thus obviates the need for continuous user inputs.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG. 1 is a block diagram of an electric vehicle charging environment for robust optimization of charging operations of a charging station, according to an embodiment of the present invention;
FIG. 2 is a Graphical User Interface showing an initial power demand curve depicting actual consumption of power at by a plurality of electric vehicles at different time slots in a day, according to an embodiment of the present invention;
FIG. 3 is a Graphical User Interface showing an initial charging status plot depicting actual charging status of a plurality of electric vehicles after a pre-defined duration, according to an embodiment of the present invention;
FIG. 4 is a Graphical User Interface showing an updated power demand curve depicting actual consumption of power at different time slots in a day, according to an embodiment of the present invention;
FIG. 5 is a Graphical User Interface showing an updated charging plot depicting actual charging status of a plurality of electric vehicles after a pre-defined duration, according to an embodiment of the present invention;
FIG. 6 is a Graphical User Interface showing a final power demand curve depicting updated consumption of power at different time slots in a day, according to an embodiment of the present invention;
FIG. 7 is a Graphical User Interface showing a final charging plot depicting updated charging status of a plurality of electric vehicles after the pre-defined duration, according to an embodiment of the present invention; and
FIG. 8 is a process flowchart illustrating an exemplary method of robust optimization of charging operations of a charging station associated with electric vehicles, according to an embodiment of the present invention.

Various embodiments are described with reference to the drawings, wherein like reference numerals are used to refer to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

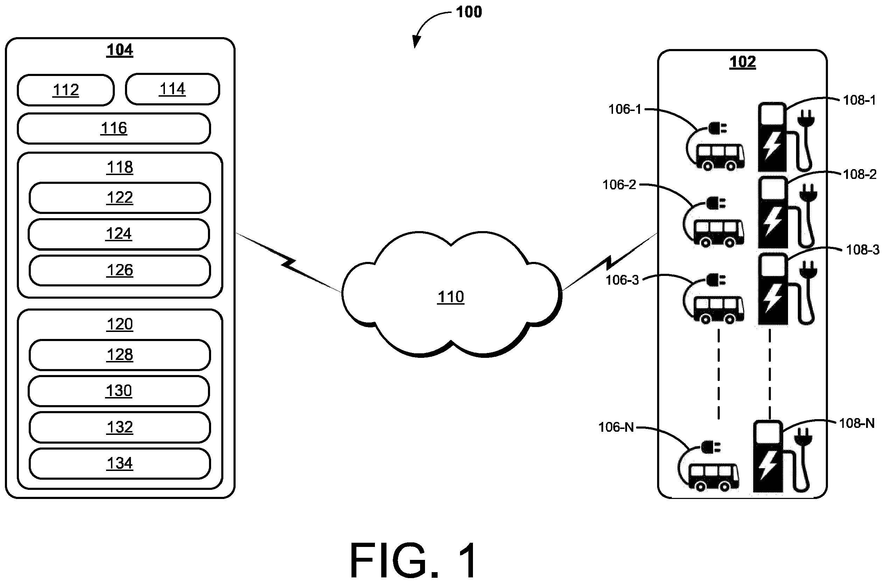

FIG. 1 is a block diagram of an electric vehicle (EV) charging environment 100 capable of charging a plurality of EVs, according to an embodiment of the present invention. Examples of an EV may include, but are not limited to, an electric bike, an electric car, an electric bus, an electric truck, and so on. In FIG. 1, the EV charging environment 100 includes a charging station 102 and a computing system 104. As used herein, "charging station" or a "charging depot" may refer to an environment comprising a plurality of chargers 106-1, 106-2, 106-3, ..., 106-N, collectively referred to as the chargers 106 and individually referred to as the charger 106. The chargers 106 may have different power ratings capable of charging EVs having charge storage units, such as battery, of different capacities.

Further, the charging station 102 may be configured to cater to a plurality of EVs 108-1, 108-2, 108-3, ..., 108-N, collectively referred as the EVs 108 and individually referred to as the EV 108, in a stipulated time. In an example, the stipulated time may vary depending various parameters, such as a type of EV, a state of charge of the EV upon arrival at the charging station, capacity of a charge storage unit (battery) of the EV, and so on. For example, in the case of an electric car arriving at the charging station 102 with 25% charge left in the energy storage unit, the stipulated time for complete charging of the electric car may be 1 hour. On the other hand, in the case of an electric bus arriving at the charging station 102 with 25% charge left in the energy storage unit, the stipulated time for complete charging of the electric bus may be 2 hours.

Further, the charging station 102 may be configured to provide sequential charging or standard charging. In an example, the sequential charging may involve charging a first EV until reaching a desired state of charge of the first EV and then charging another EV thereafter. The standard charging may include allowing two EVs to share a single charger's power between two charging ports (also referred to as charging dispensers). In a preferred embodiment, the charging station 102 may include 23 chargers such that each charger is associated with two charging ports or dispensers. Thus, the charging station 102 may be configured to charge 46 EVs in the stipulated time.

In a preferred embodiment, the charging station 102 may include an infrastructure of chargers 106 with different rated power capacities and types. In an example, the charging station 102 is configured to charge 46 EVs with different charge storage capacities and same maximum power. The charging station 102 and th EV 108 specifications are listed in below.

Table 1

| | |
|---|---|
| Number of EVs : | 46 |
| EV battery capacity : | 240kWh × 5, 384kWh × 8, 512kWh × 33 |
| EV maximum power : | 200×46 kW |

(continued)

| Number of chargers : | 23 |
|---|---|
| Number of connectors per charger : | 2 (Type: Sequential) |
| Charger maximum power : | 150kW × 9, 200kW × 14 |
| Connector maximum power : | 150kW × 9, 200kW × 14 |

In a preferred embodiment of the present invention, the charging station 102 is communicatively connected to the computing system 104 via a network 110. The network 110 may be a wireless network, a wired network, or a combination thereof. The network 110 can also be an individual network or a collection of many such individual networks, interconnected with each other and functioning as a single large network, e.g., the Internet or an intranet. The network 110 can be implemented as one of the different types of networks, such as intranet, local area network (LAN), wide area network (WAN), the internet, and such. The computing system 104 may be a desktop computer, laptop computer, tablet, smart phone and the like. The computing system 104 may be a standalone server or may be a remote server on a cloud computing platform. In a preferred embodiment, the computing system 104 may be a cloud-based computing system. The computing system 104 is capable of delivering applications (such as cloud applications) for optimizing operations of the charging station 102.

The computing system 104 may comprise processor(s) 112, interface(s) 114, and a memory 116. The processor(s) 112 may include microprocessors, microcomputers, microcontrollers, digital signal processors, central processing units, state machines, logic circuitries, and/or any other devices that manipulate signals and data based on computer-readable instructions. Further, functions of the various elements shown in the figures, including any functional blocks labelled as "processor(s)", may be provided through the use of dedicated hardware as well as hardware capable of executing computer-readable instructions.

The interface(s) 114 may allow the connection or coupling of the computing system 104 with one or more other devices, through a wired (e.g., Local Area Network, i.e., LAN) connection or through a wireless connection (e.g., Bluetooth®, Wi-Fi). The interface(s) 114 may also enable intercommunication between different logical as well as hardware components of the computing system 104.

The memory(s) 116 may be a computer-readable medium, examples of which include volatile memory (e.g., RAM), and/or non-volatile memory (e.g., Erasable Programmable read-only memory, i.e., EPROM, flash memory, etc.). The memory(s) 116 may be an external memory, or internal memory, such as a flash drive, a compact disk drive, an external hard disk drive, or the like. The memory(s) 116 may further include data which either may be utilized or generated during the operation of the computing system 104.

The computing system 104 may further include engine(s) 118 and data 120. The engine(s) 118 includes a determination engine 122, an adjustment engine 124, and other engine(s) 126. The other engine(s) 126 may further implement functionalities that supplement functions performed by the computing system 104 or any of the engine(s) 118. The data 120, on the other hand, includes data that is either stored or generated as a result of functions implemented by any of the engine(s) 118 or the computing system 104. It may be further noted that information stored and available in the data 120 may be utilized by the engine(s) 118 for performing various functions by the computing system 104. In an example, the data 120 may include vehicle charging data 128, station data 130, power data 132, and other data 134. It may be noted that such examples are only indicative. The present approaches may be applicable to other examples without deviating from the scope of the present subject matter.

The present invention predicts operation of the charging station under the uncertainties in the operational factors and accordingly advises on charging infrastructure to be deployed in the charging station to achieve a desired target state of charge of the EVs within the stipulated time.

In operation, the determination engine 122 may obtain vehicle data associated with each of the plurality of EVs 108. The vehicle data may include a state of charge (SoC) of an EV 108 upon arrival at the charging station 102. For example, under deterministic scenario, an expected SoC of the EV 108 upon arrival at the charging station 102 may be 25%, whereas due to uncertainties caused due to traffic situation or environmental temperature, an actual SoC of the EV 108 upon arrival at the charging station 102 may be 15%. The determination engine 122 may therefore obtain data pertaining to the actual SoC of the EV 108 upon arrival of the EV 108 at the charging station 102.

Further, the vehicle data may include an arrival time of the EV 108 at the charging station 102. In an example, the EVs 108 may be provided a schedule to arrive at the charging station 102. Under deterministic scenario, an expected arrival time of an EV 108 at the charging station 102 may be 11 AM every day, whereas, due to uncertainties caused due to traffic situation or driver behavior, an actual arrival time of the EV 108 at the charging station 102 may be 11:10 AM. The determination engine 122 may therefore obtain data pertaining to the actual arrival time of the EV 108 at the charging station 102.

In addition, the vehicle data may include the maximum power of the EV 108, a charging schedule of the EV 108, a capacity of a charge storage unit of the EV 108, mapping information of corresponding charger 106, and so on. For example, the mapping information may indicate information as to which EV would be charged by which port of a charger at the charging station 102. For example, based on the maximum power of an electric vehicle and the schedule of the electric vehicle, a charger may be assigned for charging the electric vehicle. For example, an electric bus may have a maximum power of 200 kilo Watt (kW) and may be available at the charging station for 4 hours. In this scenario, a charger having the maximum power of 150 kW may be assigned for charging the electric bus. On the other hand, if an electric bus has a maximum power of 200 kW may be available at the charging station for 2 hours, then a charger having the maximum power of 200 kW may be assigned for charging the electric bus. The determination engine 122 may store the vehicle data as the vehicle charging data 128.

In a preferred embodiment, the determination engine 122 may obtain station data associated with the charging station 102. The station data may include the number of chargers 106 deployed at the charging station 102. For example, the charging station 102 may include 23 chargers 106. Further, the station data may include information pertaining to the maximum power of each of the plurality of chargers 106. For some chargers 106 may have a maximum power of about 150kW and some chargers 106 may be configured to have the maximum power of about 200kW.

The station data may also include information pertaining to the number of ports or dispensers (not shown) per charger 106. In a preferred embodiment, each charger 106 includes two ports or dispensers. Further, the station data may include information associated with maximum power of each port. For example, some ports may have a maximum power of about 150kW and some ports 104 may be configured to have the maximum power of about 200kW. The determination engine 122 may store the station data as the station data 130.

Further, the determination engine 122 may employ the vehicle charging data 128 and the station data 130 to determine a status of the EVs 108 that are charged at the charging station 102. For example, the determination engine 122 may determine how much power is required by the charging station 102 to charge the plurality of EVs 108 as per their target SoC. A target SoC may be a desired SoC of an energy storing unit of an EV 108, after the pre-defined charging duration. The target SoC may vary for the EVs 108 based on a type of the EV 108.

To determine the power demand of the plurality of EVs 108, the determination engine 122 may generate a graphical representation of a variation in power consumption of each of the plurality of EVs 108 with respect to a time of charging of each of the plurality of EVs 108. For example, the determination engine 122 may generate a power demand curve where one axis depicts power consumption, and the other axis depicts the time. The determination engine 122 may generate the power demand curve using a sampling technique, such as a random sampling technique, a Monte Carlo Simulation, and so on. The power demand curve facilitates accurately predicting the power demand of the plurality of EVs 108 that may be scheduled for charging at the charging station 102 on the next day in advance considering the uncertainty in operational factors. Details pertaining to the power demand curve would be described in later paragraphs of the description.

The determination engine 122 may also determine if all or some of the plurality of EVs 108 have achieved the target SoC, after a pre-defined charging duration. In a preferred embodiment, the determination engine 122 may generate another graphical representation, such as a charging status plot, depicting variation in a state of charge of each of the plurality of EVs 108 upon completion of the pre-defined charging duration of each of the plurality of EVs 108. The charging status plot may depict an actual state of charge (SoC) of each of the plurality of EVs 108, after the pre-defined charging duration. Once the pre-defined charging duration is over, the determination engine 122 may determine if a set of EVs 108 from amongst the plurality of EVs 108 has failed to achieve a pre-defined target SoC, after the pre-defined charging duration. For example, the pre-defined target SoC for each EV 108 may be 100% charging of the charge storage unit of each EV 108. The determination engine 122 may identify those EVs 108 which have failed to charge completely after the pre-defined duration or are undercharged.

Once the set of undercharged EVs 108 is identified, the adjustment engine 124 may compute a target power to reach the target SoC of the set of EVs 108. In a preferred embodiment, the adjustment engine 124 may analyze that one of reason for the undercharged EVs 108 may be that the power of the charger 106 at the charging station 102 may be insufficient. Another reason for the undercharged EVs 108 may be that the maximum power of the undercharged EVs 108 may have to be increased. Accordingly, the adjustment engine 124 may compute the target power to achieve the target SoC of the set of EVs 108 or the undercharged EVs 108. The target power may be computed using the below mentioned equation:

$$Target\ power = max\ power + \frac{Battery\ capacity\ *\ Maximum\ SoC\ in\ deficit}{Duration\ in\ hours\ the\ EV\ is\ available\ in\ station\ *\ 100}$$

In a preferred embodiment, the target power may be computed for the charger 106 as well as the EV 108. Accordingly, the above equation may be applicable for both the EV 108 and the charger 106. For example, the *"max power"* may be indicative of the maximum power of the EV 108 or the charger 106. Further, the computation of the target power is based on a capacity of at least one charge storage unit associated with each EV 108, charging duration of each EV 108, and a difference between the actual SoC and the target SoC of each EV 108. The adjustment engine 124 may store the computed target power of each of the undercharged EVs 108 as the power data 132.

Based on the computation of the target power, the adjustment engine 124 may adjust the maximum power of each charger 106. In a preferred embodiment, the adjustment engine 124 may simulate increasing the maximum power of the charger 106. For example, the adjustment engine 124 may determine that the maximum power of each charger 106 associated with charging of the set of EVs (undercharged EVs) 106 is less than the maximum power of the set of EVs 108. If it is determined that the maximum power of each charger 106 is less than the maximum power of the set of EVs 108, the adjustment engine 122 may increase the maximum power of the charger 106 to meet the maximum power of the set of EVs 108. For instance, if the charger 106 of the charging station 102 has the maximum power of 150kW while the EV 108 has the maximum power of 200kW, the adjustment engine 124 may increase the maximum power of the charger 106 to 200kW.

In a preferred embodiment, upon increasing the maximum power of each charger 106 associated with the charging of the undercharged EVs 108, the adjustment engine 124 may determine whether a subset of EVs from the set of EVs has failed to reach the target SoC, after the pre-defined charging duration. For example, if the set of EVs 108 or the undercharged EVs 108 include 15 EVs, the adjustment engine 124 may increase the maximum power of the chargers 106 associated with the charging of the undercharged EVs 108. Thereafter, the determination engine 122 may generate the power demand curve and the charging status plot for all EVs 108 with the chargers 106 having increased maximum power. After the charging, the adjustment engine 124 may determine if there are still any undercharged EVs 108 which are not charged as per the target SoC. For example, from the 15 undercharged EVs 108, there may be 8 EVs that are not charged as per the target SoC after increasing the maximum power of the chargers 106.

Thereafter, the adjustment engine 124 may determine that the maximum power of each charger 106 associated with charging of the set of EVs (undercharged EVs) 106 is equal to the maximum power of the set of EVs 108. Based on the determination, the adjustment engine 124 may increase the maximum power of each of the undercharged EV 108. Based on the updated power of the undercharged EVs 108, the determination engine 122 may re-generate the power demand curve and the charging status plot. Based on the re-generated power demand curve and the charging status plot, the adjustment engine 124 may verify that after increasing the maximum power of each of the undercharged EV 108, almost all EVs 108 achieve the target SoC.

Accordingly, before even deploying the charging station, the present invention facilitates the station operator to know the desirable charging infrastructure. Thus, the present invention facilitates saving the cost of upgrading any of the charging equipments at a later point. Further, the present invention provides a robust solution to prevent any undercharging of the EVs even when there are uncertainties, such as time of arrival, SoC on arrival, etc. related to the operating factors of the EVs.

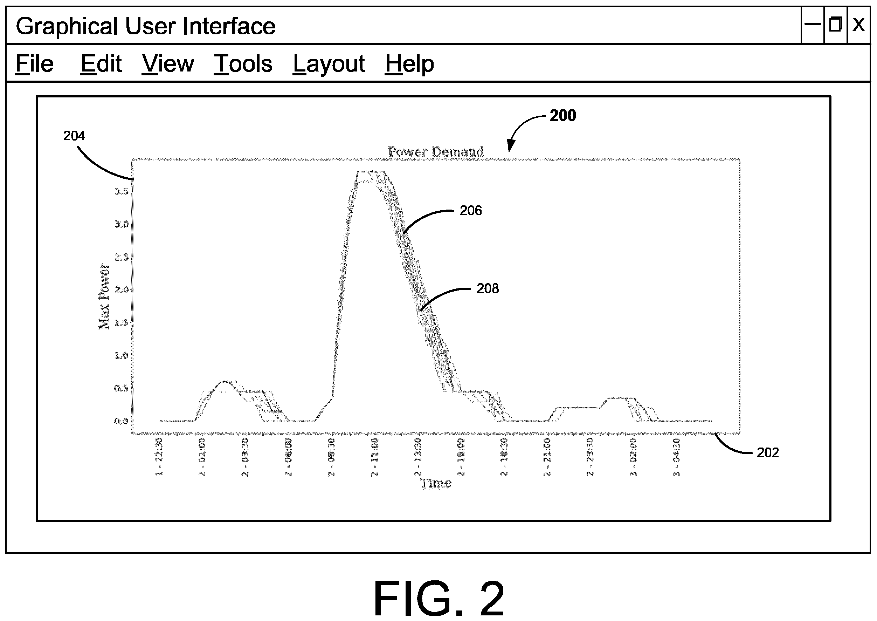

FIG. 2 is a Graphical User Interface showing an initial power demand curve 200 depicting actual consumption of power by the plurality of EVs at different time slots in a day, according to an embodiment of the present invention. The initial power demand curve 200 may depict consumption of power at a charging station, such as the charging station 102, in a day. In an example, the determination engine 122 may generate a power demand curve based on an expected power demand of the charging station 102. The determination engine 122 may employ an algorithm to generate the power demand curve in a deterministic scenario, i.e., without considering any uncertainties in the schedule of the EVs or the SoC of the EVs upon arrival at the charging station. Thereafter, the determination engine 122 may generate the initial power demand curve 200 based on the actual power demand of the EVs.

In a preferred embodiment, to predict the actual power demand of the EVs 108, the determination engine 122 may employ a sampling technique, such as Monte Carlo simulation (MCS) to simulate the effect of uncertainties in the output. For example, each MCS generates an EV charging event instance that is slightly different from one another. Such differences aggregate over the number of MCS iterations to predict a power demand of the charging station 102. In the present embodiment, about 100 MCS are performed and the initial power demand curve 200 is generated by the determination engine 122.

The x-axis 202 of the initial power demand curve 200 depicts a time (day - time) of charging of the EVs and the y-axis 204 of the initial power demand curve 200 represents a power demand of the EVs. Further, the dotted line 206 depicts a power demand of the EVs as per the deterministic scenario, where all EVs are getting charged as per their schedule. The grey lines 208 depict an actual power demand of the EVs, where the uncertainties in the schedule and SoC of the EVs are taken into account. Based on the initial power demand curve 200, the determination engine 122 may identify that the power demand is at its peak between 10 to 11:30. Accordingly, the station operator may order the power in advance to meet the requirements of the next day.

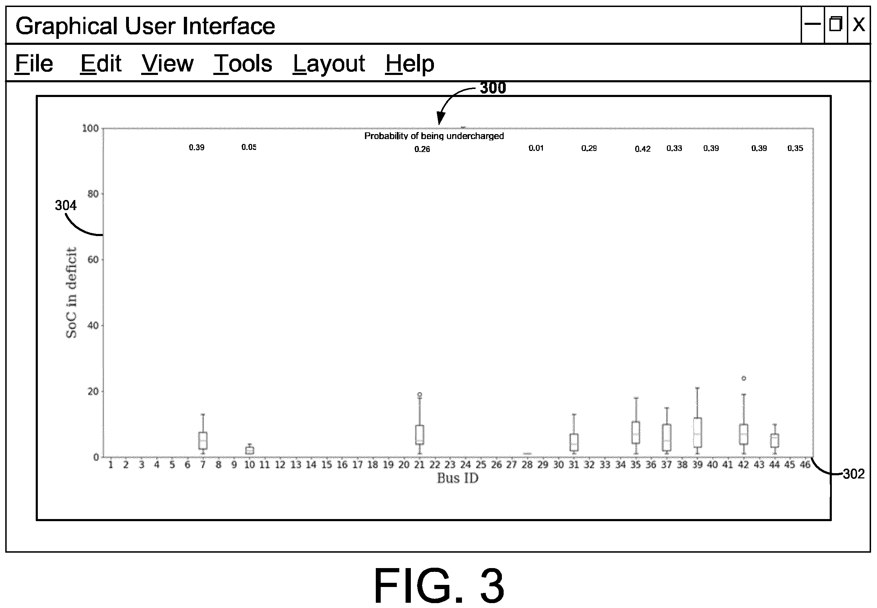

FIG. 3 is a Graphical User Interface showing an initial charging status plot 300 depicting the actual charging status of a plurality of EVs after a pre-defined duration, according to an embodiment of the present invention. The initial charging status plot 300 may depict a summary of undercharged EVs at the charging station, such as the charging station 102, after the duration specified for the type of EV being charged at the charging station. The pre-defined duration may vary from 1 hour to 4 hours based on the capacity of the charge storage units (batteries) of the EVs. In a preferred embodiment, considering that the EVs are electric buses having charge storage units of capacity in a range of about 240 kilowatt hours (kWh) to about 512kWh.

In an example, the determination engine 122 may first generate a charging status plot based on an expected charging status of the plurality of EVs. In the deterministic scenario, the determination engine 122 may expect all EVs to charge completely. Therefore, in the deterministic scenario, there would not be any undercharged buses. Thereafter, the determination engine 122 may generate the initial charging status plot 300 based on the actual charging status of the plurality of EVs.

In a preferred embodiment, to determine the actual charging status of the EVs, the determination engine 122 may employ the algorithm. The x-axis 302 of the charging status plot 300 represents a vehicle ID and the y-axis 304 represents a shortage or deficit in state of charge (SoC) of the EVs with respect to a target SoC of the EVs. In an example, the target SoC of the vehicles may be 100%. The initial charging status plot 300 may be in the form of a box plot that indicates the variation of departure SoC of the EVs, due to uncertainties.

The determination engine 122 may determine if a set of EVs 108 from amongst the plurality of EVs 108 has failed to achieve the pre-defined target SoC, after a pre-defined charging duration. In an embodiment, as shown in FIG. 3, there are at least 10 EVs with significant undercharge after the pre-defined charging duration. The initial charging status plot 300 also indicates a probability of undercharging of the EVs. The variation in charging status of the EVs may lead to failure in terms of providing vehicle services to customers and eventual loss of business.

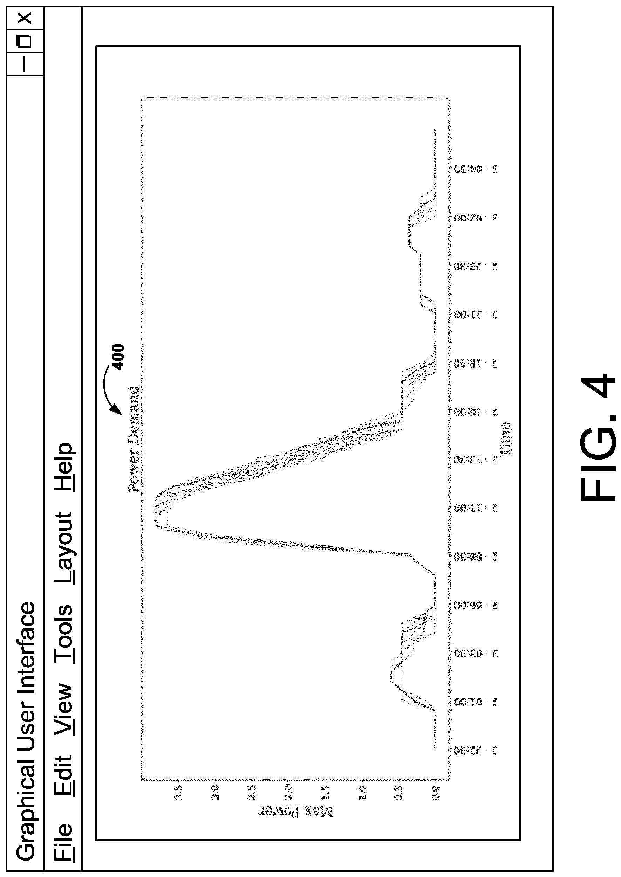

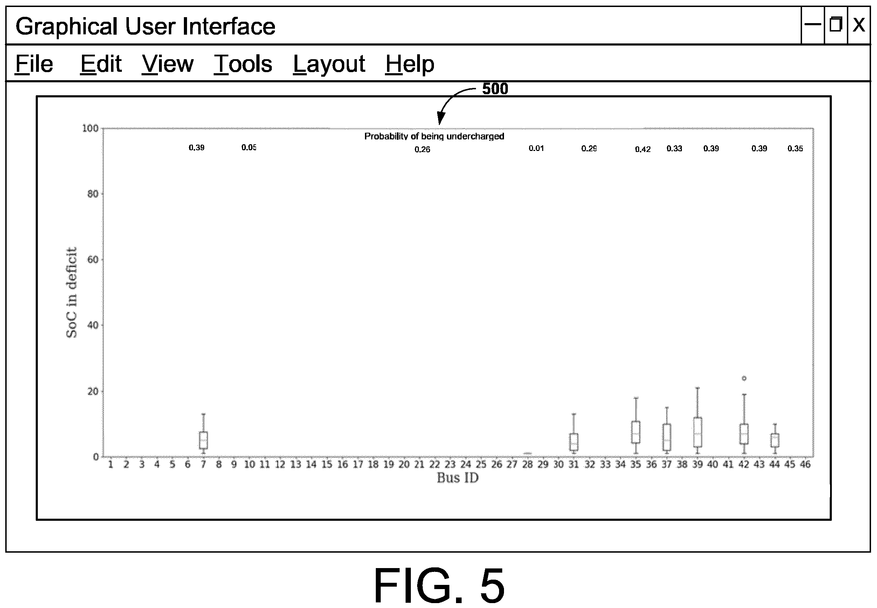

FIG. 4 is a Graphical User Interface showing an updated power demand curve 400 depicting actual consumption of power at different time slots in a day and FIG. 5 is an illustration of an updated charging status plot 500 depicting actual charging status of a plurality of electric vehicles 108 after a pre-defined duration, according to different embodiments of the present invention. As described with reference to FIGS. 2 and 3, as some of the EVs 108 did not get charged as per the target SoC, the adjustment engine 124 may compute a target power to reach the target SoC of the set of EVs 108. The target power may be computed using the below mentioned equation:

$$Target\ power\ =\ max\ power + \frac{Battery\ capacity\ *\ Maximum\ SoC\ in\ deficit}{Duration\ in\ hours\ the\ EV\ is\ available\ in\ station\ *\ 100}$$

In a preferred embodiment, the target power may be computed for the charger 106 as well as the EV 108. Accordingly, the above equation may be applicable for both the EV 108 and the charger 106. For example, the *"max power"* may be indicative of the maximum power of the EV 108 or the charger 106. Further, the computation of the target power is based on a capacity of at least one charge storage unit associated with each EV 108, charging duration of each EV 108, and a difference between the actual SoC and the target SoC of each EV 108.

In a preferred embodiment, the adjustment engine 124 may simulate increasing the maximum power of the charger 106 based on the computed target power. For example, the adjustment engine 124 may determine that the maximum power of each charger 106 associated with charging of the set of EVs (undercharged EVs) 108 is less than the maximum power of the set of EVs 108. If it is determined that the maximum power of each charger 106 is less than the maximum power of the set of EVs 108, the adjustment engine 122 may increase the maximum power of the charger 106 to be equal to the maximum power of each EV 108 from the set of EVs 108. For example, if the set of EVs 108 or the undercharged EVs 108 include 10 EVs, the adjustment engine 124 may increase the maximum power of the chargers 106 associated with the charging of those 10 undercharged EVs 108.

For instance, if the charger 106 associated with charging an undercharged EV 108 has the maximum power of 150kW while the undercharged EV 108 has the maximum power of 200kW, the adjustment engine 124 may increase the maximum power of the charger 106 to 200kW. Based on the increased power of the charger 106, the determination engine 122 may generate the updated power demand curve 400 and the updated charging status plot 500. As may be evident from FIG. 4, the updated power demand after increasing the charger power is equivalent to the power demand as depicted in the power demand curve 200.

The updated charging status plot 500, as depicted in FIG. 5, shows improvement over the charging status plot 300 as only 7 EVs 108 remain undercharged. The 7 EVs may be connected to chargers 106 with a maximum power rating of 200kW, and these 7 EVs 108 also have the maximum power rating of 200kW only. Therefore, increasing the maximum power of the charger 106 for these 7 EVs 108 did not had any effect in decreasing the SoC in deficit of these 7 EVs 108.

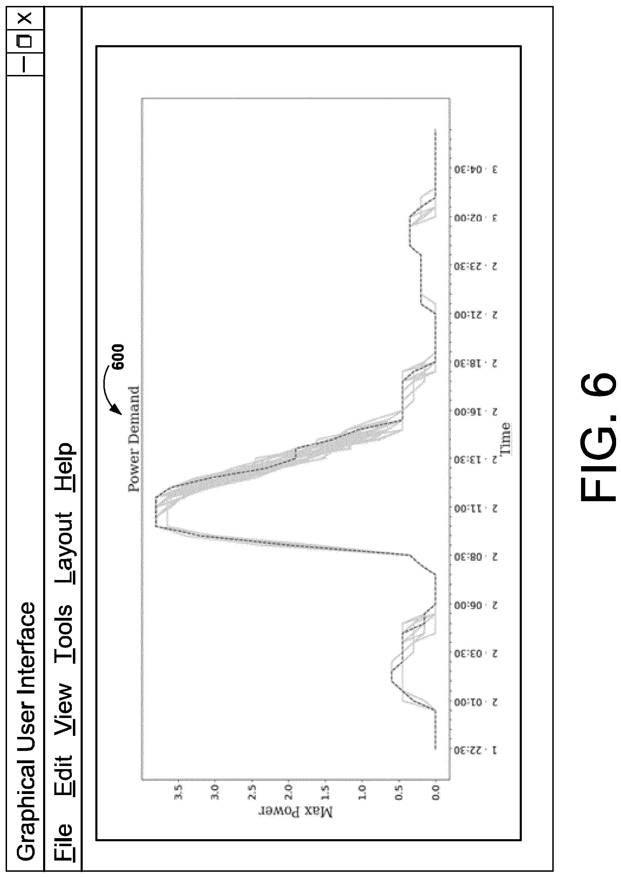

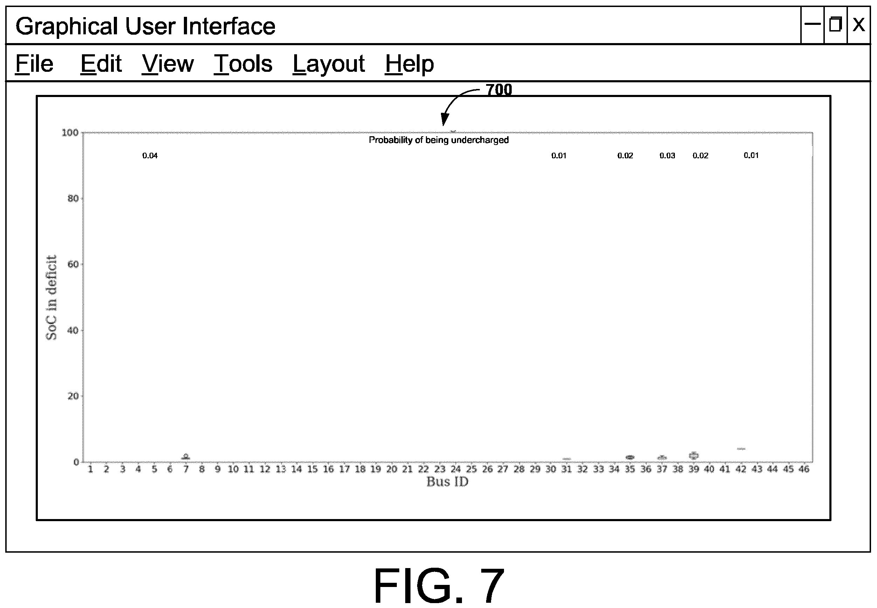

FIG. 6 is a Graphical User Interface showing a final power demand curve 600 depicting a final consumption of power at different time slots in a day and FIG. 7 is a Graphical User Interface showing a final charging status plot 700 depicting the finals charging status of a plurality of electric vehicles 108 after the pre-defined duration, according to different embodiments of the present invention. After charging the EVs 108 with the chargers 106 having updated maximum power, the adjustment engine 124 may determine if there are still any undercharged EVs 108 which are not charged as per the target SoC. For example, as may be seen from the charging status plot 500, there are 7 EVs 108 that are not charged as per the target SoC even after increasing the maximum power of the chargers 106.

In a preferred embodiment, the adjustment engine 124 may determine that the updated maximum power of each charger 106 associated with charging of the set of EVs (undercharged EVs) 108 is equal to the maximum power of each EV 108 from the set of EVs 108. Based on the determination, the adjustment engine 124 may simulate increase in the maximum power of each of the undercharged EVs 108. Based on the updated power of the undercharged EVs 108, the determination engine 122 may generate the final power demand curve 600 and the final charging status plot 700.

As may be seen from FIG. 6, the updated power demand after increasing the power of the EVs 108 is equivalent to the power demand as depicted in the power demand curve 200. On the other hand, FIG. 7 depicts the final charging status plot 700 in which it can be observed that there are negligible undercharged EVs 108. Therefore, the present invention takes into consideration the uncertainties observed in operation of the charging station 102 while ensuring that all the EVs 108 are fully charged, after the pre-defined charging duration.

Based on the re-generated power demand curve and the charging status plot, the adjustment engine 124 may verify that after increasing the maximum power of each of the undercharged EV 108, almost all EVs 108 achieve the target SoC.

Those skilled in the art will recognize that, for simplicity and clarity, the full structure and operation of all data processing systems suitable for use with the present disclosure is not being depicted or described herein. Instead, only so much of a computing system 104 as is unique to the present disclosure or necessary for an understanding of the present disclosure is depicted and described. The remainder of the construction and operation of the computing system 104 may conform to any of the various current implementation and practices known in the art.

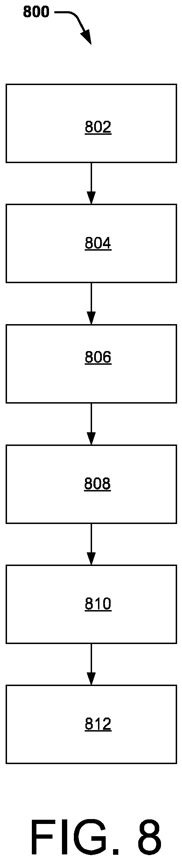

FIG. 8 is a process flowchart illustrating an exemplary method 800 of optimizing operations of a charging station, such as the charging station 102 associated with electric vehicles, such as EVs 108, according to an embodiment of the present invention.

At step 802, vehicle data associated with each of the plurality of electric vehicles and station data associated with the charging station is obtained. The vehicle data may indicate at least a state of charge (SoC) of an electric vehicle (EV) upon arrival at the charging station, an arrival time of the EV at the charging station, and an maximum power of the EV. Further, the station data may include number of chargers deployed at the charging station, an maximum power of each charger, mapping information of corresponding EV, number of ports per charger, maximum power of each charger, and maximum power of each port.

For example, considering a charging station having an infrastructure of chargers with different rated power capacities and types. The chargers may be standard or sequential. In a preferred embodiment, the charging station may be associated wtih the charging of 46 EVs with different charge storage capacities and same maximum power. An exemplary specificaiton of the charging station and the EVs as listed in Table 1 above.

In an example implementation, the adjustment engine 124 of the computing system 104 may obtain the vehicle data and the station data. Th adjustment engine 124 may communicate, such as through a network, with the charging station to obtain the vehicle data and the station data.

At step 804, a graphical representation of a variation in power consumption of each of the plurality of EVs with respect to a time of charging of each of the plurality of EVs is generated. For example, a power demand curve is generated depicting on one axis different time slots at which EVs are charged and on another axis the maximum power consumed during charging the EVs. Based on the graphical representation, a power demand of the plurality of EVs is predicted, at the charging station. In one aspect, a sampling technique, such as a Monte Carlo Simulation (MCS) technique is employed to generate the graphical representation of the variation in the power consumption of each of the plurality of EVs with respect to the time of charging.

In an example implementation, the adjustment engine 124 of the computing system 104 may generate the graphical representation depicting a variation in power consumption of each of the plurality of EVs with respect to a time of charging of each of the plurality of EVs.

Advantageously, the generated graphical representation is used for representing the power demand with respect to time of charging of EVs. The graphical representation may indicate when the power demand for charging the EVs is at its peak. Accordingly, an operator of the charging station may procure electricity to charge the EVs.

At step 806, it is determined if a set of EVs from amongst the plurality of EVs has failed to achieve a pre-defined target SoC, after a pre-defined charging duration. In an aspect, the pre-defined target SoC for each EV may be 100% charging of the EV. In an aspect of the present invention, based on the vehicle data and the station data, a graphical representation is generated. Advantageously, the graphical representation indicates a summary of undercharged EVs. The graphical representation may on one axis depict an ID of the EV and on another axis depict SoC in deficit with respect to the pre-defined target SoC.

In an example implementation, the adjustment engine 124 of the computing system 104 may generate the graphical representation depicting a summary of SoC of all EVs at the charging station. Thus, based on the graphical representation, the adjustment module may determine a number of EVs that are undercharged or not charged as per the pre-defined target SoC.

At step 808, a target power to reach the pre-defined target SoC of the set of EVs is computed. The target power may be understood as the power required to charge the set of EVs such that the set of EVs reach the target SoC. In an aspect of the present invention, it is determined how much power is required such that the set of EVs may achieve the pre-defined target SoC. In a preferred embodiment, the target power is computed using the below equation.

$$Target\ power = max\ power + \frac{Battery\ capacity * Maximum\ SoC\ in\ deficit}{Duration\ in\ hours\ the\ vehicle\ is\ available\ in\ station * 100} \qquad ... (1)$$

where, max power indicates a maximum power of a charge storage unit of an EV or a maximum power of a charger, battery capacity indicates capacity of the charge storage unit associated with each EV, maximum SoC in deficit indicates a difference between the actual SoC and the target SoC of each EV.

In a preferred embodiment, the adjustment engine 124 may compute the target power that may be required by the set of EVs which have remain undercharged after the pre-defined charging duration.

At step 810, the maximum power of each charger associated with charging of each EV from the set of EVs or the maximum power of the set of EVs may be adjusted as per the computed target power. In a preferred embodiment, when some of the EVs are undercharged, it is determined if the maximum power of each charger associated with charging the set of EVs is less than the maximum power of each EV from the set of EVs. Based on the determination, the maximum power of each charger is increased to meet the maximum power of each EV from the set of EVs.

In an aspect of the present invention, the adjustment engine 124 may compute the target power to reach the target SoC of the set of EVs 108. Based on the computed target power of the chargers 108, the adjustment engine 124 may simulate increasing the maximum power of the chargers associated with the charging of the set of EVs.

After charging the EVs with the chargers having updated maximum power, it is determined if there are still any undercharged EVs which are not charged as per the target SoC. In an example, it is determined that the updated maximum power of each charger associated with charging of the set of EVs (undercharged EVs) is equal to the maximum power of each EV from the set of EVs. Based on the determination, the maximum power of each of the undercharged EVs is increased. Thereafter, based on the increased or updated power of the undercharged EVs, a final charging status plot is generated.

At step 812, a notification is generated for deploying the charging station based on the adjustments of at least one of the maximum power of each charger and the maximum power of the set of EVs, as per the target power. In a preferred embodiment, as a result of simulating the operations of the charging station, once it is determined that optimized charging is provided to the plurality of EVs, the charging station may be deployed.

The present invention can take a form of a computer program product comprising program modules accessible from computer-usable or computer-readable medium storing program code for use by or in connection with one or more computers, processing units, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

**List of References**

an electric vehicle charging environment 100
a charging station 102
a computing system 104
a charger/ a plurality of chargers 106
an electric vehicle/a plurality of electric vehicles 108
a network 110

processor(s) 112
interface(s) 114
a memory 116
engine(s) 118
data 120
a determination engine 122
an adjustment engine 124
other engine(s) 126
vehicle charging data 128
station data 130
power data 132
other data 134
an initial power demand curve 200
an x-axis 202
a y-axis 204
dotted line 206
grey lines 208
an initial charging status plot 300
an x-axis 302
a y-axis 304
an updated power demand curve 400
an updated charging status plot 500
a final power demand curve 600
a final charging status plot 700

**Claims**

1. A computer-implemented method for simulating operations of a charging station to optimize charging of a plurality of electric vehicles (EVs) (108) scheduled for charging at the charging station (102), wherein the charging station (102) comprises a plurality of chargers (106), the method, executed by a processing unit, comprising:

   obtaining vehicle data associated with each of the plurality of EVs (108) and station data (130) associated with the charging station (102), the vehicle data being indicative of at least a state of charge (SoC) of an EV upon arrival at the charging station (102), an arrival time of the EV at the charging station (102), and a maximum power of the EV, and the station data (130) being indicative of at least a maximum power of each of the plurality of chargers (106);
   based on the vehicle data and the station data (130), determining if a set of EVs from amongst the plurality of EVs (108) has failed to achieve a pre-defined target SoC, after a pre-defined charging duration;
   if the set of EVs has failed to achieve the pre-defined target SoC, computing a target power to reach the target SoC of the set of EVs;
   adjusting at least one of the maximum power of each charger (106) associated with charging of each EV from the set of EVs and the maximum power of the set of EVs as per the target power, to reach the target SoC of the set of EVs; and
   generating a notification for deploying the charging station (102) based on the adjustments of at least one of the maximum power of each charger (106) and the maximum power of the set of EVs, as per the target power.

2. The method according to claim 1, wherein the vehicle data further comprises a charging schedule, mapping information of corresponding charger (106), and a capacity of a charge storage unit, of each of the plurality of EVs (108).

3. The method according to claim 1 or claim 2, wherein the method further comprises predicting, based on the vehicle data, a power demand of the plurality of EVs (108) scheduled for charging, at the charging station (102).

4. The method according to claims 1 to 3, wherein predicting the power demand comprises generating a graphical representation of a variation in power consumption of each of the plurality of EVs (108) with respect to a time of charging of each of the plurality of EVs (108), at the charging station (102).

5. The method according to claims 1 to 4, wherein the method further comprises using a sampling technique to generate the graphical representation of the variation in the power consumption of each of the plurality of EVs (108) with respect to the time of charging.

6.  The method according to claim 1, wherein the station data (130) further includes number of chargers (106) deployed at the charging station (102), mapping information of corresponding EV, number of ports per charger, and maximum power of each port.

7.  The method according to claim 1, wherein the method further comprises determining the set of EVs by predicting an actual state of charge of each of the plurality of EVs (108), after the pre-defined charging duration.

8.  The method according to claims 1 to 7, wherein the method further comprises generating a graphical representation depicting variation in a state of charge of each of the plurality of EVs (108) upon completion of the pre-defined charging duration of each of the plurality of EVs (108).

9.  The method according to claim 1, wherein computing the target power comprises computing a capacity of at least one charge storage unit associated with each EV, charging duration of each EV, and a difference between the actual SoC and the target SoC of each EV.

10. The method according to claim 1, wherein adjusting the maximum power of each charger (106) associated with charging of each EV from the set of EVs comprises:

    determining that the maximum power of each charger (106) associated with charging of the set of EVs is less than the maximum power of the set of EVs; and
    based on the determination, increasing the maximum power of each charger (106) associated with charging of the set of EVs, to meet the maximum power of the set of EVs.

11. The method according to claims 1 to 10, wherein the method further comprises upon increasing the maximum power of each charger (106) associated with charging of the set of EVs, determining whether a subset of EVs from the set of EVs has failed to reach the target SoC, after the pre-defined charging duration.

12. The method according to claims 1 to 11, wherein the method further comprises, upon determining that the subset of EVs has failed to reach the target SoC:

    determining that the maximum power of each charger (106) associated with charging of the set of EVs is equal to the maximum power of the set of EVs; and
    based on the determination, increasing the maximum power of the EV based on the target power.

13. The method according to claim 1, wherein the charging station (102) provides one of a sequential charging and a standard charging of the plurality of EVs (108).

14. A computing system having a processing unit to execute a method according to claims 1 to 13.

15. A computer-program product, having machine readable instructions stored therein, that when executed by a processing unit, causes the processing unit to perform a method according to claims 1 to 13.

FIG. 1

FIG. 2

Graphical User Interface   — ☐ X

<u>F</u>ile   <u>E</u>dit   <u>V</u>iew   <u>T</u>ools   <u>L</u>ayout   <u>H</u>elp

FIG. 3

Graphical User Interface    — ☐ X

File   Edit   View   Tools   Layout   Help

400

Power Demand

FIG. 4

FIG. 5

FIG. 6

EP 4 512 654 A1

Graphical User Interface    — □ X

<u>F</u>ile    <u>E</u>dit    <u>V</u>iew    <u>T</u>ools    <u>L</u>ayout    <u>H</u>elp

FIG. 7

800

802

804

806

808

810

812

# FIG. 8

Europäisches
Patentamt

European
Patent Office

Office européen
des brevets

# EUROPEAN SEARCH REPORT

Application Number

EP 23 19 3285

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/276447 A1 (KUMAR ARUN [US] ET AL) 9 September 2021 (2021-09-09) <br> * paragraph [0031] * <br> * paragraph [0033] – paragraph [0034] * <br> * paragraph [0090] * <br> * figures 4A-4C * | 1-15 | INV. <br> B60L53/62 <br> B60L53/66 <br> B60L53/68 |
| Y | US 2022/335545 A1 (KLEIN DAVID J [US] ET AL) 20 October 2022 (2022-10-20) <br> * paragraph [0074] – paragraph [0076] * <br> * paragraph [0078] * <br> * paragraph [0085] – paragraph [0087] * <br> * paragraph [0102] * | 1-15 | |
| A | WO 2022/226124 A2 (VOLTA CHARGING LLC [US]) 27 October 2022 (2022-10-27) <br> * the whole document * | 1-15 | |
| | | | TECHNICAL FIELDS SEARCHED (IPC) <br><br> B60L |

The present search report has been drawn up for all claims

| Place of search | Date of completion of the search | Examiner |
|---|---|---|
| The Hague | 25 January 2024 | Marín Saldaña, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**      EP 23 19 3285

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2024

| Patent document cited in search report | Publication date | Patent family member(s) | Publication date |
|---|---|---|---|
| US 2021276447 A1 | 09-09-2021 | US 2021276447 A1<br>WO 2019126806 A1 | 09-09-2021<br>27-06-2019 |
| US 2022335545 A1 | 20-10-2022 | NONE | |
| WO 2022226124 A2 | 27-10-2022 | NONE | |

EPO FORM P0459